# EUROPEAN PATENT APPLICATION

(11) **EP 4 797 255 A1**
(43) Date of publication of application: **26.08.2026**
(21) Application number: 24879843.1
(22) Date of filing: 18.10.2024
(51) Int. Cl.: G10L 15/00, G10L 15/10

(54) **VIDEO EDITING DEVICE AND PROGRAM**

(30) Priority: 20.10.2023 JP 2023181239
(71) Applicant: WOVN TECHNOLOGIES, INC., Tokyo 107-0062 (JP)
(72) Inventor: IKUTA Masahito, Tokyo 107-0062 (JP)
(74) Representative: Boult Wade Tennant LLP
(86) International application number: PCT/JP2024/037256
(87) International publication number: WO 2025/084423

(57) **Abstract**

The present invention provides a technical means capable of adjusting wording according to the attributes of a speaker that has uttered lines or a statement in a video content. This video editing device comprises: a recognition means that recognizes each voice in a video file to be processed as first text data indicating the voice and attribute data of a speaker that has uttered the voice; a translation means that translates the first text data into second text data of another language; and a modification means that, on the basis of the attribute data, generates third text data obtained by modifying the wording of part of a translation result indicated by the second text data, and outputs the generated third text data together with data indicating an image in the video file.

## Description

### TECHNICAL FIELD

The present invention relates to a technology for generating a video file, in particular, a technology for generating a video file containing subtitles and dubbed voice from a video file containing voice in a foreign language.

### BACKGROUND

There are Patent Documents 1, 2, 3 as documents disclosing this type of technology. The receiver described in Patent Document 1 buffers the multimedia presentation, extracts the audio component and video component of this multimedia presentation, performs speech recognition analysis on the audio component to generate subtitle text data, and integrates this subtitle text data into the original video component and outputs it. The transcription server described in Patent Document 2 translates the text generated by the speech recognition unit into the user's target language according to the user's profile, and sends the translation text, which is the translation result, to the user's mobile device. The machine translator described in Patent Document 3 uses a timed text track in an online video service as a processing target, translates the timed text of the timed text track into a predetermined foreign language, and sends the content of the online video service with the timed text rewritten to the user's viewer client.

### Prior Art Reference

### Patent Documents

Patent Document 1: U.S. Patent No. 8781824
Patent Document 2: European Patent No. 2725816
Patent Document 3: US patent application publication No. 2010/0138209

### SUMMARY

### Problems to be solved

However, the video content dubbing technology proposed so far has a problem that the wording of lines or a statement in a dubbed voice is uniform, making it difficult to convey the speaker's emotions and nuances of expression to the viewer.

The present invention has been made in view of such a problem, and an object thereof is to provide a technical means capable of adjusting the wording according to the attributes of a speaker who uttered lines or a statement in a video content.

### Means for solving the Problems

In order to solve the above problem, a video editing device according to a preferred aspect of the present invention is characterized by comprising: a recognition means that recognizes each voice in a video file to be processed as first text data indicating the voice and attribute data of a speaker who uttered the voice; a translation means that translates the first text data into second text data of another language; and a modification means that, on the basis of the attribute data, generates third text data obtained by modifying wording of a part of a translation result indicated by the second text data, and outputs the generated third text data together with data indicating an image in the video file.

In this aspect, the recognition means may have an attribute recognition processing means that applies FFT processing to voice data of the voice in the video file and identifies attributes of the speaker who uttered the voice based on spectrum data obtained by the FFT processing.

In addition, the recognition means comprises: a voice extraction means that extracts only voice data of a recorded part of human vocal sounds from the voice data from beginning to end of the video content in the video file; and a division means that divides the voice data extracted by the voice extraction means into a plurality of pieces of voice data, each representing a set of vocal sounds, and the attribute recognition processing means may identify the attributes of the speaker who uttered the voice for each of the plurality of pieces of voice data divided by the division means.

A program according to another preferred aspect of the present invention causes a computer to achieve: a recognition function that recognizes each voice in a video file to be processed as first text data indicating the voice and attribute data of a speaker who uttered the voice; a translation function that translates the first text data into second text data of another language; and a modification function that, on the basis of the attribute data, generates third text data obtained by modifying wording of a part of a translation result indicated by the second text data, and outputs the generated third text data together with data indicating an image in the video file.

### Effects

According to the present invention, it is possible to generate, from video content containing voice in a foreign language, video content containing dubbed voice information that allows a speaker's emotions and linguistic nuances to be easily conveyed to a viewer.

### BRIEF DESCRIPTION OF DRAWINGS

FIG. 1 is a diagram illustrating an overall configuration of a video editing system according to an embodiment of the present invention.
FIG. 2 is a flowchart illustrating an operation of the video editing system of FIG. 1.
FIG. 3 is a diagram illustrating processing contents of steps S201 to S203 in FIG. 2.
FIG. 4 is a diagram illustrating processing contents of steps S204 to S210 in FIG. 2.
FIG. 5 is a diagram illustrating processing contents of S211 to S214 in FIG. 2.

### DETAILED DESCRIPTION

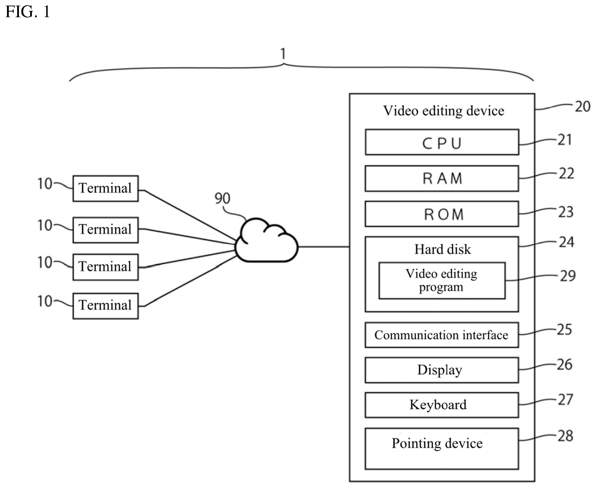

Hereinafter, embodiments of the present invention are explained with reference to the drawings. FIG. 1 is a diagram illustrating an overall configuration of a video editing system 1 according to an embodiment of the present invention. This video editing system 1 generates, from a first video file containing voice in a first language (e.g., English), a second video file in which the voice in the video content is made into subtitles or dubbed voice in a second language (e.g., Japanese).

The video editing system 1 has a terminal 10 and a video editing device 20. The terminal 10 and the video editing device 20 are connected via network 90. The terminal 10 is a smartphone or personal computer used by a user. The video editing device 20 is a server operating under the management of a service provider. The video editing device 20 has a CPU21, RAM22, ROM23, hard disk 24, communication interface 25, display 26, keyboard 27, and pointing device 28. The CPU21 uses the RAM22 as a work area while executing programs stored in the ROM23 or the hard disk 24. The hard disk 24 stores a video editing program 29.

The video editing program 29 has the following functions:

### a1. Recognition function

This is a function that receives the first video file to be processed from the terminal 10 via network 90, and recognizes each voice in the first language in the first video file as first text data indicating the voice and attribute data of a speaker who uttered the voice.

### b1. Translation function

This is a function that translates the first text data into second text data in the second language.

### c1. Modification function

This is a function that, on the basis of the attribute data, generates third text data obtained by modifying wording of a part of a translation result indicated by the second text data, and outputs the generated third text data together with data indicating an image in the video file.

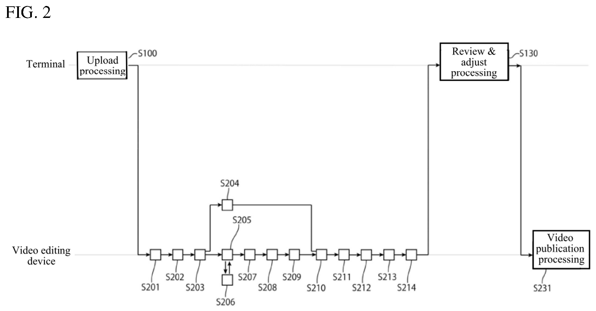

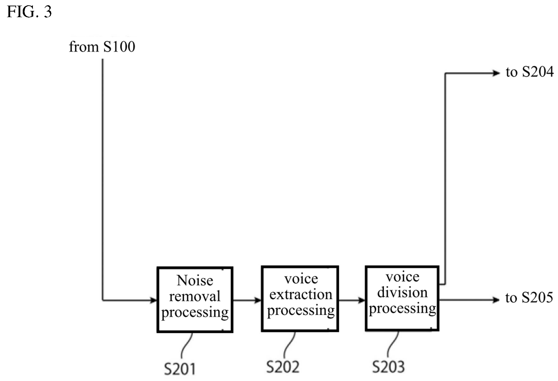

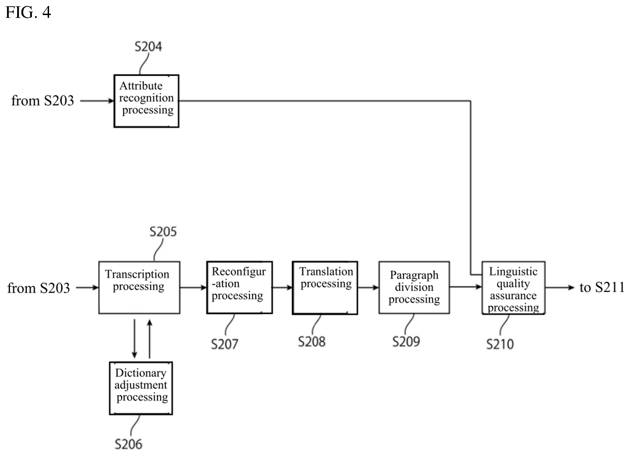

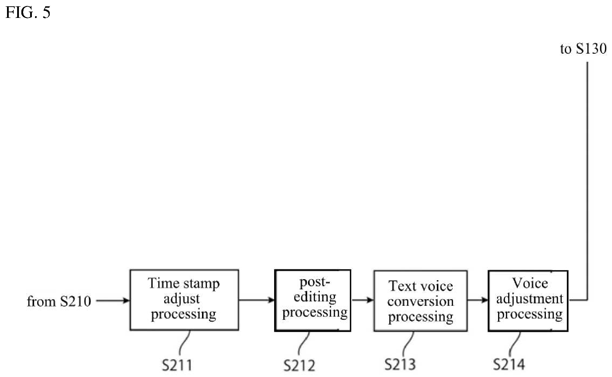

Next, the operation of the present embodiment will be described. FIG. 2 is a flowchart illustrating an operation of the present embodiment. FIG. 3 illustrates processing contents of steps S201 to S203 in FIG. 2. FIG. 4 illustrates processing contents of steps S204 to S210 in FIG. 2. FIG. 5 illustrates processing contents of S211 to S214 in FIG. 2. Steps S201 to S214, and S231 in these figures are executed by the video editing program 29.

In step S100 in FIG. 2, the terminal 10 performs an upload processing. In the upload processing, the user performs an operation of selecting a desired video file from the memory of the terminal 10. Once this operation is performed, the terminal 10 sends the selected video file to the video editing device 20 as the first video file to be processed. When the CPU 21 of the video editing device 20 receives the first video file from the terminal 10, it stores the first video file in RAM22.

In step S201 of FIG. 2 and FIG. 3, the CPU21 of the video editing device 20 performs a noise removal processing. In the noise removal processing, the CPU21 decodes the first video file in the RAM22, stores a series of frame image data from the beginning to the end of the decoded video content, and voice data showing a sound waveform of the sound from the beginning to the end of the video content in the RAM22, and removes noise from the voice data in the RAM22. This noise removal may be performed using a known noise removal program.

In step S202 of FIG. 2 and FIG. 3, the CPU21 of the video editing device 20 performs a voice extraction processing. In the voice extraction processing, the CPU21 extracts only voice data of a recorded part of human vocal sounds (lines, statement, etc.) in the video content from the voice data subjected to the noise removal in the RAM22, and stores this voice data in the RAM22. More specifically, from multiple sound tracks in the noise-removed voice data, tracks, where human vocal sounds are recorded, are searched, and only the voice data of the sound waveform recorded on this track is extracted and stored in the RAM22 as the voice data to be processed later.

In step S203 of FIG. 2 and FIG. 3, the CPU21 of the video editing device 20 performs a voice division processing. In the voice division processing, the CPU21 divides the voice data of the human vocal sounds in the RAM22 into a plurality of pieces of voice data, each representing a group of vocal sounds. To explain more specifically, in the voice division processing, the CPU21 scans the entire sound waveform from the start over the period from the beginning to the end of the video content indicated by the original voice data, and each time a silent point appears, the CPU21 repeats a processing of clipping the sound waveform prior to that point to create one piece of voice data. The plurality of pieces of voice data obtained by this voice division processing shows a line or statement uttered by a speaker.

In step S204 of FIG. 2 and FIG. 4, the CPU21 of the video editing device 20 performs an attribute recognition processing. In the attribute recognition processing, for each of the plurality of pieces of voice data in the RAM22, the CPU21 recognizes the attributes of the speaker who uttered the voice indicated by the voice data, and stores the attribute data indicating the recognized attributes in the RAM22 in association with the voice data. The attributes includes the approximate age of the speaker who uttered the voice (for example, infant, under 10s, 20s, 30s, 40s, 50s, 60s or older), gender (for example, female or male), and tone of voice (for example, high, normal, or low). More specifically, in the attribute recognition processing, FFT (Fast Fourier transform) processing is applied to each piece of voice data, and the attributes of the speaker who uttered the voice are identified based on the spectrum data obtained by FFT. The attribute identification based on the spectrum data may be performed by inputting the voice data into a trained model for attribute recognition.

In step S205 of FIG. 2 and FIG. 4, the CPU21 of the video editing device 20 performs a transcription processing. In the transcription processing, for each piece of voice data in the RAM22 divided by the voice division processing, the CPU21 performs the transcription processing on that piece of voice data, sets the processing result of the transcription processing as first text data indicating the voice in the voice data, and stores this first text data in the RAM22 in association with a time stamp indicating the appearance timing of the voice within the voice content.

In step S206 of FIG. 2 and FIG. 4, the CPU21 of the video editing device 20 performs dictionary adjustment processing. In the dictionary adjustment processing, words obtained by the transcription processing of step S205 are registered in a dictionary library.

In step S207 of FIG. 2 and FIG. 4, the CPU21 of the video editing device 20 performs a reconfiguration processing. In the reconfiguration processing, the CPU21 reconfigures the first text data in the RAM22 into a longer chunk of first text data. For example, when first text data TX (30), TX (31), TX (32), TX (33), TX (34), TX (35) of six consecutive voices in the RAM22 (numbers in parentheses indicate the order of appearance of the voices counted from the beginning of the video content) form one meaningful paragraph, then the first text data TX (30), TX (31), TX (32), TX (33), TX (34), and TX (35) of these six voices are combined into one piece of first text data TX' (30).

In step S208 of FIG. 2 and FIG. 4, the CPU21 of the video editing device 20 performs translation processing. In the translation processing, the CPU21 translates the reconfigured first text data in the RAM22 into a second language, and stores this translation result in the RAM22 as second text data indicating the translated subtitles of each paragraph from the beginning to the end of the video content indicated by the original voice data.

In step S209 of FIG. 2 and FIG. 4, the CPU21 of the video editing device 20 performs a paragraph division processing. In the paragraph division processing, the CPU21 divides the translated second text data in the RAM22 into pieces of second text data corresponding to subtitles to be displayed on the same image within the video content. For example, in a case where the second text data TX' (30) of one paragraph in the RAM22 corresponds to subtitles to be displayed separately on two screens, this second text data TX' (30) is divided into second text data TX" (30-33) corresponding to the subtitle of the former screen and second text data TX" (34-35) corresponding to the subtitle of the latter screen.

In step S210 of FIG. 2 and FIG. 4, the CPU21 of the video editing device 20 performs a linguistic quality assurance(LQA) processing. In the linguistic quality assurance processing, on the basis of the attribute data in the RAM22, the CPU21 generates third text data obtained by modifying wording of a part of the translation result indicated by the second text data in the RAM22, and stores the generated third text data in the RAM22. For example, in a case where the second text data TX'' (30-33) in the RAM22 corresponding to the subtitles on one screen consists of four voices, and the attribute data corresponding to these four voices indicates an approximate age = 20s, gender = female, tone of voice = normal, then in the linguistic quality assurance processing, the second text data TX'' (30-33) is converted into wording in a normal tone of a woman in her 20s to generate third text data TX‴ (30-33). Further, in a case where the second text data TX'' (34-35) corresponding to the subtitles on the next screen consists of two voices, and the attribute data corresponding to these two voices indicates an approximate age = 20s, gender = female, tone of voice = high, then in the linguistic quality assurance processing, the second text data TX'' (34-35) is converted into wording in a high tone of a woman in her 20s to generate third text data TX‴ (34-35). The generation of this third text data may be performed by inputting the second text data into a trained model for linguistic quality assurance processing.

In step S211 of FIG. 2 and FIG. 5, the CPU21 of the video editing device 20 performs a time stamp adjust processing. In the time stamp adjust processing, the CPU21 causes the display 26 of the video editing device 20 to display a time stamp adjust screen. The time stamp adjust screen associates and shows subtitles indicated by a series of third text data in the RAM22 and the appearance timing of the subtitles indicated by the third text data in the video content. The operator can perform an operation to correct the appearance timing of the subtitles on the time stamp adjust screen. When the operation to correct the appearance timing of the subtitles is performed, the CPU21 changes the time stamp corresponding to the third text data in the RAM22 in response to this operation.

In step S212 of FIG. 2 and FIG. 5, the CPU21 of the video editing device 20 performs a post-editing processing. In the post-editing processing, the CPU21 causes the display 26 of the video editing device 20 to display a post-editing screen. The post-editing screen shows the subtitles indicated by a series of third text data in the RAM22 and correction fields thereof. The operator can perform an operation to correct the subtitles on the post-editing screen. When the operation to correct the subtitles is performed, the CPU21 changes the third text data in the RAM22 in response to this operation.

In step S213 of FIG. 2 and FIG. 5, the CPU21 of the video editing device 20 performs an text voice conversion processing. In the text voice conversion processing, the CPU21 converts a series of third text data in the RAM22 into dubbed voice data corresponding to the text data, and stores this dubbed voice data in the RAM22. The conversion from text to dubbed voice is preferably performed by inputting the third text data into a trained model for conversion.

In step S214 of FIG. 2 and FIG. 5, the CPU21 of the video editing device 20 performs a voice adjustment processing. In the voice adjustment processing, the CPU21 causes the display 26 of the video editing device 20 to display a voice adjustment screen. The voice adjustment screen shows the sound waveform of the dubbed voice data in the RAM22 and its adjustment operating elements. The operator can perform an operation to adjust the dubbed voice in the voice adjustment screen. When the operation to adjust the dubbed voice is performed, the CPU21 changes the dubbed voice data in the RAM22 in response to this operation.

In step S130 of FIG. 2, the terminal 10 performs a review & adjust processing. In the review & adjust processing, the terminal 10 receives the image data, the third text data, and the dubbed voice data constituting a piece of video content in the RAM22 of the video editing device 20, and displays a review & adjust screen with the data arranged in chronological order. On the review &adjust screen, the user can perform an operation to correct the subtitles indicated by the third text data or the dubbed voice indicated by the dubbed voice data. When the operation to correct the subtitles or the dubbed voice is performed, the terminal 10 sends data indicating the corrected content to the video editing device 20. When the CPU21 of the video editing device 20 receives the data indicating the corrected content, the CPU21 changes the third text data in the RAM22 and the dubbed voice data.

In step S231 of FIG. 2 and FIG. 5, the CPU21 of the video editing device 20 performs a video publication processing. In the video publication processing, the CPU21 uploads the image data, the third text data, and the dubbed voice data constituting a piece of video content in the RAM22 to a designated video posting site. This upload may be performed as a video file containing subtitled video content including the image data and the third text data, or as a video file containing dubbed video content including the image data and the dubbed voice data. In addition, the image data, the third text data, and the dubbed voice data constituting the video content may be uploaded as uncompressed files or may be uploaded as compressed and encoded files. There are two modes to upload the subtitled video content. The first mode is a mode in which the image data constituting the video content is treated as a video file, the third text data is treated as a subtitle file, and the image and the subtitles are uploaded as separate files. The second mode is a mode in which the third text data is written as subtitles to the video file of the image data of the video content, and the image and the subtitles are uploaded as one file. In the first mode, the subtitles cannot be displayed if an application for playing the video file does not support subtitle files. However, in the second mode, the subtitles can be displayed even if the application for playing the video file does not support subtitle files.

The above are details of the present embodiment. The video editing device 20 according to the present embodiment comprises: a recognition means that recognizes each voice in a video file to be processed as first text data indicating the voice and attribute data of a speaker who uttered the voice; a translation means that translates the first text data into second text data of another language; and a modification means that, on the basis of the attribute data, generates third text data obtained by modifying wording of a part of a translation result indicated by the second text data, and outputs the generated third text data together with data indicating an image in the video file. Accordingly, it is possible to generate, from video content containing voice in a foreign language, video content containing dubbed voice information that allows a speaker's emotions and linguistic nuances to be easily conveyed to a viewer.

Although the embodiment of the present invention has been described above, the following modifications may be added to this embodiment.
(1) In the above embodiment, the types of attributes recognized by the attribute recognition processing are not limited to the approximate age, gender, and tone of voice of the speaker who uttered the voice. Other attributes may also be identified. For example, a historical background of a speaker who uttered a voice (whether the speaker lived in the Middle Ages, the Early Modern period, or the like, or whether the speaker lives in the present day) may be recognized as an attribute of that speaker.
(2) In the above embodiment, it is not necessary to perform both the time stamp adjust processing and the post-editing processing, or either one of them. In an aspect where neither the time stamp adjust processing nor the post-editing processing is performed, immediately after the linguistic quality assurance processing is performed, the text voice conversion processing is proceeded, and the third text data, which has undergone wording modification by the linguistic quality assurance processing, is converted into dubbed voice data corresponding thereto.
(3) In the above embodiment, it is not necessary to perform both the voice adjustment processing and the review & adjust processing, or either one of them. In an aspect where neither the voice adjustment processing nor the review & adjust processing is performed, immediately after the text voice conversion processing is performed, the video publication processing is proceeded, and the image data, the third text data, and the dubbed voice data constituting the video content are uploaded to a designated video posting site.

### EXPLANATION OF REFERENCE SYMBOLS

1 video editing system
10 terminal
20 video editing device
21 CPU
22 RAM
23 ROM
24 hard disk
25 communication interface
27 display
28 keyboard
29 pointing device
29 video editing program
90 network

## Claims

1. A video editing device, comprising:
a recognition means that recognizes each voice in a video file to be processed as first text data indicating the voice and attribute data of a speaker who uttered the voice;
a translation means that translates the first text data into second text data of another language; and
a modification means that, on the basis of the attribute data, generates third text data obtained by modifying wording of a part of a translation result indicated by the second text data, and outputs the generated third text data together with data indicating an image in the video file.

2. The video editing device according to claim 1, wherein
the recognition means comprises:
an attribute recognition processing means that applies FFT processing to voice data of the voice in the video file and identifies attributes of the speaker who uttered the voice based on spectrum data obtained by the FFT processing.

3. The video editing device according to claim 2, wherein
the recognition means comprises:
a voice extraction means that extracts only voice data of a recorded part of human vocal sounds from the voice data from beginning to end of the video content in the video file; and
a division means that divides the voice data extracted by the voice extraction means into a plurality of pieces of voice data, each representing a group of vocal sounds,
the attribute recognition processing means identifies the attributes of the speaker who uttered the voice for each of the plurality of pieces of voice data divided by the division means.

4. A program for causing a computer to achieve:
a recognition function that recognizes each voice in a video file to be processed as first text data indicating the voice and attribute data of a speaker who uttered the voice;
a translation function that translates the first text data into second text data of another language; and
a modification function that, on the basis of the attribute data, generates third text data obtained by modifying wording of a part of a translation result indicated by the second text data, and outputs the generated third text data together with data indicating an image in the video file.
